# FASCICULE DE BREVET EUROPEEN

(11) **EP 2 059 431 B1**
(45) Date de publication et mention de la délivrance du brevet: **18.08.2010**
(21) Numéro de dépôt: 07803949.2
(22) Date de dépôt: 26.06.2007
(51) Int. Cl.: B60W 50/02

(54) **DISPOSITIF ET PROCEDE DE CONTROLE DU BON FONCTIONNEMENT D'UN CAPTEUR DE DETECTION D'UN CHANGEMENT D'ETAT D'UNE PORTE DE CONDUCTEUR POUR VEHICULE AUTOMOBILE**
VORRICHTUNG UND VERFAHREN ZUR ÜBERPÜFUNG DER KORREKTEN FUNKTIONSWEISE EINES SENSORS ZUR ERKENNUNG VON ÄNDERUNGEN DES ZUSTANDS EINER FAHRERTÜR EINES KRAFTFAHRZEUGES
DEVICE AND METHOD FOR CHECKING THAT A SENSOR THAT DETECTS A CHANGE IN STATE OF A MOTOR VEHICLE DRIVER'S DOOR IS OPERATING CORRECTLY

(30) Priorité: 04.09.2006 FR 0607726
(43) Date de publication de la demande: 20.05.2009
(73) Titulaire: Renault S.A.S., 92100 Boulogne-Billancourt (FR)
(72) Inventeur: FEBRER, Pascal, 75014 Paris (FR); HEDOUIN, Gael, 92800 Puteaux (FR)
(86) Numéro de dépôt international: PCT/FR2007/051533
(87) Numéro de publication internationale: WO 2008/029035

(56) Documents cités:
- WO-A-01/14195
- WO-A-2004/054837
- US-A- 5 632 706
- US-A1- 2004 089 491
- US-B1- 6 450 587

## Description

L'invention concerne la détection de l'ouverture et de la fermeture d'une porte de conducteur d'un véhicule automobile.

Plus particulièrement, l'invention concerne le contrôle du bon fonctionnement d'un capteur destiné à détecter le changement d'état ouvert ou fermé d'une porte de conducteur d'un véhicule automobile.

Une application particulièrement intéressante d'un tel capteur concerne le pilotage d'un frein de parking assisté qui utilise une détection de changement d'état de la porte du conducteur du véhicule pour mettre en oeuvre une phase de stationnement après détection de l'achèvement d'une phase de roulage.

Il s'agit, en particulier, d'éviter tout mouvement de la voiture lorsque l'on considère que le conducteur a quitté son véhicule.

On pourra à cet égard se référer au document EP 099 2386 qui décrit un système qui contrôle l'état ouvert ou fermé de la porte du conducteur pour mettre en oeuvre le système de freinage du véhicule après qu'il ait été considéré que le conducteur a quitté son véhicule.

D'autres technologies utilisent des capteurs de masse incorporés à l'assise du siège du conducteur, comme décrit dans le document antérieur JP 2002250776.

Mais, comme on le conçoit, il est nécessaire de s'assurer du bon fonctionnement des capteurs mis en oeuvre et, en particulier, des capteurs utilisés pour détecter le changement d'état ouvert ou fermé de la porte du conducteur.

US-B1-6 450 587 décrit un actionnement du frein si une porte du véhicule est ouverte, colonne 2, lignes 17 à 45, utilisant un capteur de porte, colonne 11, lignes 46 à 63 "door switch". US 2004/089491 A1 et WO 2004/054837 A divulguent l'utilisation d'un capteur de porte pour le contrôle des fonctions additionnelles du véhicule. Un contrôle du bon fonctionnement est divulgué dans WO 01/14195 A, page 7, alinéa 2, page 13, alinéas 3 et 4, est aussi dans US-A-5 632 706 , Figures 4 et 6 à 8.

C'est ainsi que l'invention a pour but de fournir un dispositif de contrôle du bon fonctionnement d'un tel capteur sans nécessiter d'utiliser des capteurs supplémentaires.

L'invention a donc pour objet, selon un premier aspect, un dispositif de contrôle du bon fonctionnement d'un capteur de détection d'un changement d'état d'une porte de conducteur de véhicule automobile comprenant des moyens pour élaborer un ensemble d'au moins un drapeau dont la valeur traduit l'apparition d'un événement pour le véhicule, des moyens pour positionner la valeur d'un paramètre représentatif de la pertinence d'un paramètre traduisant une inactivité d'un capteur d'état de la porte du véhicule à partir de la valeur d'un desdits drapeaux, et des moyens pour contrôler le basculement de la valeur d'un drapeau traduisant l'ouverture ou la fermeture de la porte après positionnement de la valeur dudit paramètre.

Selon une autre caractéristique de l'invention, le dispositif comporte en outre un compteur apte à être incrémenté à chaque positionnement de la valeur dudit paramètre représentatif de la pertinence du paramètre traduisant l'inactivité du capteur et des moyens de détection de dysfonctionnement par comparaison de la valeur du compteur avec une valeur de seuil.

Dans un mode de réalisation, les moyens pour positionner la valeur dudit paramètre comportent des moyens pour élaborer ledit paramètre à partir de la valeur d'un drapeau représentatif de l'achèvement d'une phase de fonctionnement du moteur du véhicule.

Selon encore une autre caractéristique de l'invention, le dispositif comporte des moyens pour réinitialiser le compteur à chaque basculement de la valeur du drapeau traduisant l'ouverture ou la fermeture de la porte.

L'invention a également pour objet, selon un second aspect, un procédé de contrôle du bon fonctionnement d'un capteur de détection d'un changement d'état d'une porte de conducteur de véhicule automobile.

Ce procédé comprend les étapes de :
- élaboration d'un ensemble d'au moins un drapeau dont la valeur traduit l'apparition d'un évènement pour le véhicule ;
- positionnement de la valeur d'un paramètre représentatif de la pertinence d'un paramètre traduisant l'inactivité d'un capteur d'état de la porte du véhicule à partir de la valeur d'un desdits drapeaux ; et
- contrôle du basculement de la valeur d'un drapeau traduisant l'ouverture ou la fermeture de la porte après positionnement de la valeur dudit paramètre.

Par exemple, lesdits drapeaux comprennent un drapeau de détection de l'achèvement d'une phase de fonctionnement du moteur du véhicule, un drapeau de détection d'ouverture de porte et un drapeau de détection de fermeture de la porte.

Les drapeaux sont par exemple élaborés à partir de signaux issus de capteurs de mesure.

Avantageusement, les drapeaux sont en outre positionnés pendant une période de temps prédéterminée.

Dans un mode de mise en oeuvre du procédé selon l'invention, on incrémente un compteur à chaque positionnement de la valeur dudit paramètre et l'on détecte un dysfonctionnement par comparaison de la valeur de comptage du compteur avec une valeur de seuil.

Par exemple, le paramètre représentatif de la pertinence du paramètre traduisant l'inactivité dudit capteur est positionné dans un état de pertinence haute après détection de l'achèvement d'une phase de roulage.

L'invention a encore pour objet, selon un autre aspect, un procédé de freinage d'un véhicule automobile au moyen d'un frein de parking assisté piloté au moyen d'un capteur de changement d'état de la porte de conducteur, **caractérisé en ce que** l'on contrôle le bon fonctionnement du capteur selon un procédé tel que défini ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est un schéma synoptique illustrant la structure générale d'un dispositif de contrôle selon l'invention ;
- la figure 2 est un schéma illustrant les principales phases du procédé selon l'invention pour l'élaboration des drapeaux traduisant chacun l'apparition d'un événement pour le véhicule ; et
- la figure 3 est un schéma illustrant les principales phases du procédé selon l'invention pour détecter un bon fonctionnement ou un dysfonctionnement du capteur de changement d'état de la porte du conducteur.

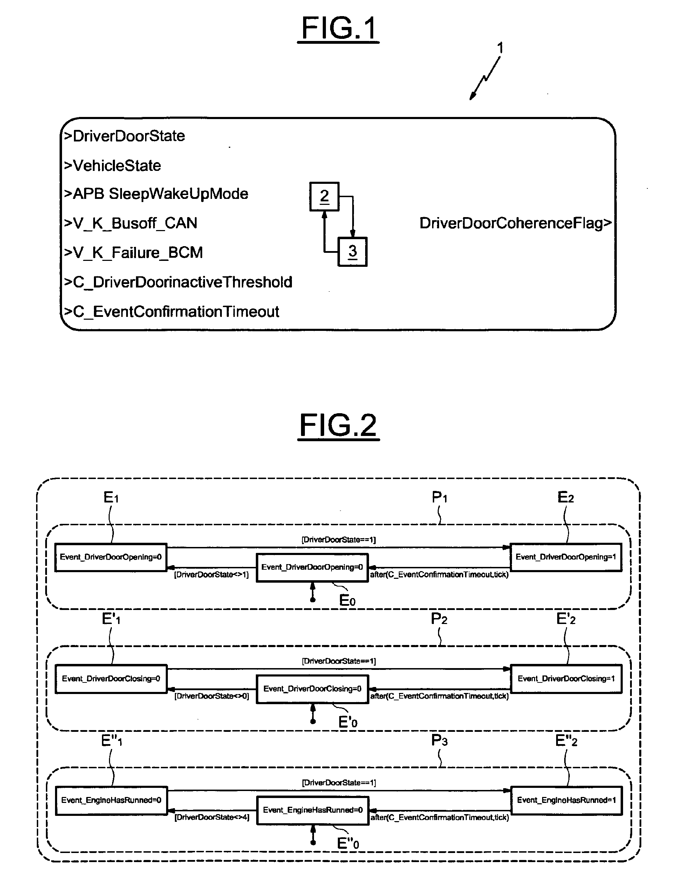

En référence à la figure 1, on a représenté l'architecture générale d'un dispositif de contrôle du bon fonctionnement d'un capteur de détection d'un changement d'état d'une porte de conducteur de véhicule automobile, désigné par la référence numérique générale 1.

Ce dispositif est par exemple destiné à être intégré à un calculateur embarqué à bord d'un véhicule automobile et, en particulier, à faire partie ou à être associé à un système de freinage assisté pour véhicule automobile qui utilise une information de changement d'état ouvert ou fermé d'une porte de conducteur pour immobiliser le véhicule après détection de l'achèvement d'une phase de roulage ou de fonctionnement du moteur.

Comme cela sera décrit en détail par la suite, le dispositif 1 est destiné à délivrer, en sortie, un signal « *DriverDoorCoherenceFlag* » qui traduit le bon fonctionnement ou, au contraire, un dysfonctionnement du capteur de détection de changement d'état de la porte de conducteur.

Ce signal de détection de dysfonctionnement « *DriverDoor CoherenceFlag* » est élaboré à partir de l'ensemble de paramètres ou variables délivrés par des capteurs appropriés, ou calculés localement, ou encore élaborés lors d'une phase de calibrage préalable.

Plus particulièrement, comme on le voit, le dispositif 1 utilise des paramètres d'entrée « *DriverDoorState* » et « *VehicleState* » délivrés, en entrée, par des capteurs de mesure appropriés et qui traduisent respectivement, d'une part, l'état ouvert ou fermé de la porte de conducteur et, d'autre part, l'état de fonctionnement du moteur.

Par exemple, le premier paramètre « *Driver-DoorState* », qui traduit l'état de la porte de conducteur est codé sur un bit, une valeur « 0 » correspondant à une porte fermée et une valeur « 1 » correspondant à une porte ouverte.

En ce qui concerne le deuxième paramètre « *VehicleState* », ce paramètre est par exemple codé sur trois bits, de la manière suivante :
- 000 correspond à un véhicule à l'arrêt, moteur arrêté ;
- 001 correspond à une activation du véhicule, par exemple par établissement du contact, moteur stoppé ;
- 010 correspond à un moteur prêt à démarrer ;
- 011 correspond au démarrage ; et
- 100 correspond à une mise en route du moteur.

Par exemple, le dispositif 1 utilise en outre des paramètres et des variables « *APBSleepWakeUpMode* » ; « *V_K_BusOff_CAN* » ; et « *V_K_Failure_BCM* » qui correspondent respectivement, à l'état de réveil du frein de parking assisté, à l'état de fonctionnement du réseau de transmission de données du véhicule, et à l'état de fonctionnement d'un module de contrôle du dispositif.

Par ailleurs, le dispositif 1 utilise des paramètres, obtenus par calibrage préalable, à savoir « *C_DriverDorrInactivvThreshold* », qui correspond à une valeur de seuil de détection de défaut d'activité du capteur de changement d'état de la porte et « *C_EventConfirmationTimeout* », qui correspond à une période de temps prédéterminée pendant laquelle est positionnée la valeur des drapeaux traduisant l'apparition d'un évènement pour le véhicule.

A partir de ces variables, le dispositif 1 élabore un ensemble de drapeaux qui traduisent chacun l'apparition d'un évènement pour le véhicule tel que l'ouverture de la porte, la fermeture de la porte, et l'achèvement d'une phase de roulage ou l'arrêt du moteur.

Ces drapeaux sont ensuite utilisés pour élaborer un paramètre « *DriverDoorSensorInactive* » qui traduit la pertinence d'un paramètre traduisant l'inactivité du capteur d'état de la porte, ce paramètre pouvant adopter soit une valeur de pertinence basse « *Driver-DoorSensor_Inactive_Unrelevant* » soit une valeur de pertinence haute « *DriveDoorSensor_Inactive_Relevant* ».

Aussi, comme illustré, le dispositif 1 comporte un module 2 d'élaboration des drapeaux servant à détecter l'apparition d'événements pour le véhicule et un module 3 servant à détecter la cohérence des informations fournies par les capteurs de détection de changement d'état de la porte.

En se référant à la figure 2, comme indiqué précédemment, dans l'exemple de réalisation considéré, le module 2 d'élaboration des drapeaux est destiné à élaborer un drapeau « *Event_DriverDoorOpening* » traduisant l'ouverture de la porte. Ce paramètre est positionné à « 1 » en cas d'ouverture de la porte et ce, pendant une période de temps prédéterminée « *C_EventTimerConfimation* » (figure 1) élaborée lors d'une phase de calibrage, égale par exemple à 100 millisecondes (phase P1).

Au cours de cette phase P1, à partir d'un état initial « *E0* », qui correspond à une initialisation à « 0 » du drapeau « *Event_DriverDoorOpening* », le drapeau est maintenu à cette valeur d'initialisation tant que la valeur du paramètre d'état « *DriverDoorState* » fournie par le capteur de mesure de changement d'état de la porte est différente de « 1 » (étape E1).

Au contraire, le drapeau « *EventDriverDoorOpening* » est positionné à « 1 » dès que la valeur du paramètre d'état de la porte « *DriverDoorState* » devient égale à « 1 », traduisant ainsi un changement d'état de la porte (étape E2).

Comme indiqué précédemment, le drapeau « *EventDriverDoorOpening* » reste positionné pendant une période de temps prédéterminée « *EventConfirmationTimeOut* », de sorte qu'à l'expiration de cette période de temps, le drapeau est réinitialisé à « 0 » (étape E0).

Lors des phases P2 et P3, des drapeaux « *Event_DriverDoorClosing* » et « *Event_EngineHasRunned* », qui traduisent respectivement une fermeture de la porte de conducteur et l'achèvement d'une phase de fonctionnement du moteur sont également élaborés.

En ce qui concerne la détection de la fermeture de porte, à partir d'un état initial E'0, qui correspond à une initialisation du drapeau « *Event_DriverDoorClosing* », ce drapeau est maintenu à 0 tant que le paramètre de changement d'état « *DriverDoorState* » est différent de 0 ( étape E'1). Au contraire, dès que ce paramètre « *DriverDoorState* » devient égal à 0, le drapeau « *Event_DriverDoorClosing* » est positionné à 1 (étape E'2). Il est ensuite réinitialisé à l'expiration de la période de temps prédéterminée.

De même, à partir d'un état initial E"0, et réinitialisation du drapeau « *Event_EngineHasRunned* », ce drapeau reste à 1 tant que le paramètre « *VehicleState* » est différent de la valeur 4 (100) (étape E"1) puis est positionné à 1 (étape E"2) dès que le paramètre « *VehicleState* » devient égal à 4. Il est ensuite réinitialisé à l'expiration de la période de temps « *C_EventConfirmationTimeOut* ».

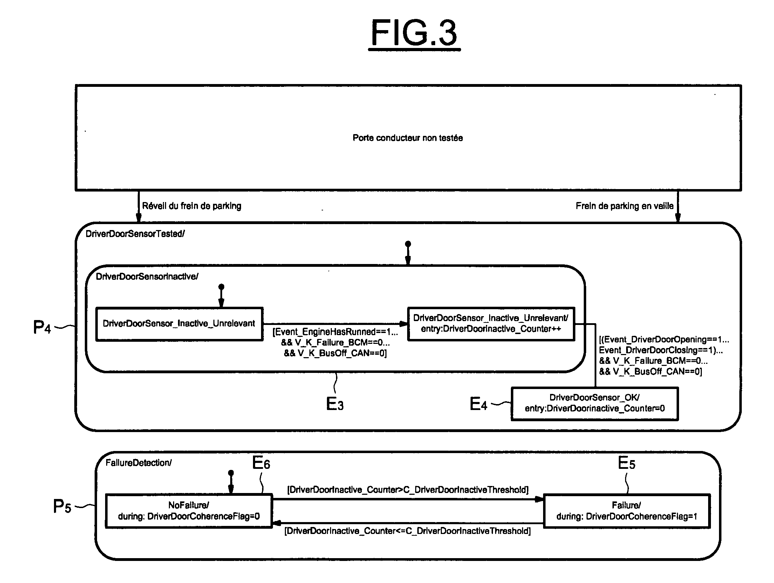

En se référant maintenant à la figure 3, la détection du bon fonctionnement ou du dysfonctionnement du capteur de changement d'état de la porte de conducteur s'effectue de la façon suivante.

Tout d'abord, au cours d'une phase P4, on élabore, comme mentionné précédemment, un paramètre représentatif de la pertinence d'un paramètre « *DriverDoorSensorInactive* » traduisant l'inactivité du capteur de changement d'état de la porte du véhicule. Ce paramètre est élaboré comme suit à partir des drapeaux préalablement générés.

En référence à la figure 3, ce paramètre peut adopter soit une première valeur « *DriverDoorSensor_Inactive-Unrelevant* », ce qui correspond à une pertinence basse de la valeur de ce paramètre « *DriverDoorSensor-Inactive* » ou, au contraire, une valeur « *DriverDoorSeusor_Inactive_Relevant* », qui correspond à une pertinence haute de ce paramètre.

Comme on le voit, ce paramètre « *DriverDoorSensor_Inactive* » adopte la deuxième valeur de pertinence haute lorsqu'il a été détecté que le moteur du véhicule a fonctionné et qu'aucun dysfonctionnement n'apparaît dans le réseau de bord du véhicule et dans le dispositif de contrôle. En effet, le paramètre « *DriverDoorSensor_Inactive* » adopte la valeur haute lorsque le paramètre « *Event_EngineHasRunned* », traduisant l'achèvement d'une phase de roulage ou l'achèvement d'une phase de fonctionnement du moteur, devient égal à 1 et que les paramètres « *V_K_FailueBCM »* et « *V_K_BusOff_CAN* » deviennent égaux à 0 (étape E3).

On notera que, au cours de cette étape, c'est-à-dire après détection de l'achèvement d'une phase de mise en marche du moteur, tendant à un positionnement au niveau haut du paramètre « *DriverDoorSensor_Inactive* », on incrémente un compteur « *DriverDoorSensor_Inactive* ».

Lors de l'étape E4 suivante, on considère que le capteur de changement d'état de la porte de conducteur fonctionne de manière correcte si l'un des drapeaux traduisant l'ouverture ou la fermeture de la porte « *Event_DriverDoorOpenirzg* » ou « *Event_DriverDoorClosing* » prend la valeur 1, et ce, en l'absence de dysfonctionnement dans le réseau de bord et dans le dispositif de contrôle (*V_K_Failure BCM* = 0 et *V_K_BusOff_CAN* =0). Au cours de cette étape E4, on réinitialise à 0 le compteur « *DriverDoorInactive_Counter* ».

Par ailleurs, lors d'une phase P5, on procède au contrôle de la valeur de comptage du compteur « *DriverDoorInactive_Counter* ».Si cette valeur de comptage dépasse une valeur de seuil prédéterminée « *C_DriverDoorInactiveThreshold* » calibrée préalablement, on considère qu'un dysfonctionnement est apparu et l'on positionne au niveau haut le drapeau « *DriverDoorCoherenceFlag* » délivré en sortie du dispositif 1 (figure 1) (étape E5).

Au contraire, on positionne à «0 » ce drapeau « *DriverDoorCoherenceFlag* » tant que la valeur de comptage « *DriverDoorInactive_Counter* » reste inférieure à la valeur de seuil « *C-DriverDoorInactiveThreshold* » (étape E6).

On notera enfin que la valeur de comptage est un paramètre qui est stocké en mémoire et que sa valeur par défaut est « 0 ». On notera également que les séquences de démarrage du moteur successives n'incrémentent pas la valeur de comptage

## Revendications

1. Dispositif de contrôle du bon fonctionnement d'un capteur de détection d'un changement d'état d'une porte de conducteur de véhicule automobile, **caractérisé en ce qu'**il comprend des moyens (2) pour élaborer un ensemble d'au moins un drapeau dont la valeur traduit l'apparition d'un événement pour le véhicule, des moyens (3) pour positionner la valeur d'un paramètre représentatif de la pertinence d'un paramètre traduisant l'inactivité d'un capteur de changement d'état de la porte du véhicule à partir de la valeur d'un desdits drapeaux, et des moyens pour contrôler le basculement de la valeur d'un drapeau traduisant l'ouverture ou la fermeture de la porte après positionnement de la valeur dudit paramètre.

2. Dispositif selon la revendication 1, **caractérisé en ce qu'**il comporte en outre un compteur apte à être incrémenté à chaque positionnement de la valeur dudit paramètre représentatif de la pertinence du paramètre traduisant l'inactivité du capteur et des moyens de détection de dysfonctionnement par comparaison de la valeur du compteur avec une valeur de seuil.

3. Dispositif selon la revendication 2, **caractérisé en ce qu'**il comporte des moyens pour réinitialiser le compteur à chaque basculement de la valeur du drapeau traduisant l'ouverture ou la fermeture de la porte.

4. Dispositif selon l'une quelconque des revendications 1 à 3, **caractérisé en ce que** les moyens pour positionner la valeur dudit paramètre comporte des moyens pour élaborer ledit paramètre à partir de la valeur d'un drapeau représentatif de l'achèvement d'une phase de fonctionnement du moteur du véhicule.

5. Procédé de contrôle du bon fonctionnement d'un capteur de détection d'un changement d'état d'une porte de conducteur de véhicule automobile, **caractérisé en ce qu'**il comporte les étapes de :
- élaboration d'un ensemble d'au moins un drapeau dont la valeur traduit l'apparition d'un évènement pour le véhicule ;
- positionnement de la valeur d'un paramètre représentatif de la pertinence d'un paramètre traduisant l'inactivité d'un capteur de changement d'état de la porte du véhicule à partir de la valeur d'un desdits drapeaux ; et
- contrôle du basculement de la valeur d'un drapeau traduisant l'ouverture ou la fermeture de la porte après positionnement de la valeur dudit paramètre.

6. Procédé selon la revendication 5, **caractérisé en ce que** lesdits drapeaux comprennent un drapeau d'identification de l'achèvement d'une phase de fonctionnement du moteur, un drapeau d'identification de l'ouverture de la porte, et un drapeau d'identification de la fermeture de la porte.

7. Procédé selon l'une des revendications 5 et 6, **caractérisé en ce que** les drapeaux sont élaborés à partir de signaux issus de capteurs de mesure.

8. Procédé selon la revendication 7, **caractérisé en ce que** les drapeaux sont positionnés pendant une période de temps prédéterminée.

9. Procédé selon l'une quelconque des revendications 5 à 8, **caractérisé en ce que** l'on incrémente un compteur à chaque positionnement de la valeur dudit paramètre et l'on détecte un dysfonctionnement par comparaison de la valeur de comptage du compteur avec une valeur de seuil.

10. Procédé selon l'une quelconque des revendications 5 à 9, **caractérisé en ce que** le paramètre représentatif de la pertinence du paramètre traduisant l'inactivité dudit capteur est positionné dans un état de pertinence haute après identification de l'achèvement d'une phase de fonctionnement du moteur.

11. Procédé de freinage d'un véhicule automobile au moyen d'un frein de parking assisté piloté au moyen d'un capteur d'ouverture de porte de conducteur, **caractérisé en ce que** l'on contrôle le fonctionnement du capteur au moyen d'un procédé selon l'une quelconque des revendications 5 à 10.

## Claims

1. Device for checking the correct operation of a sensor for detecting a change of state of a driver door of a motor vehicle, **characterized in that** it comprises means (2) for generating a set of at least one flag the value of which reflects the appearance of an event for the vehicle, means (3) for setting the value of a parameter representative of the pertinence of a parameter reflecting the inactivity of a sensor of the change of state of the vehicle door based on the value of one of the said flags, and means for checking the switching of the value of a flag reflecting the opening or closing of the door after setting of the value of the said parameter.

2. Device according to Claim 1, **characterized in that** it also comprises a counter capable of being incremented with each setting of the value of the said parameter representative of the pertinence of the parameter reflecting the inactivity of the sensor and means for detecting malfunction by comparing the value of the counter with a threshold value.

3. Device according to Claim 2, **characterized in that** it comprises means for resetting the counter on each switch of the value of the flag reflecting the opening or closing of the door.

4. Device according to any one of Claims 1 to 3, **characterized in that** the means for setting the value of the said parameter comprise means for generating the said parameter based on the value of a flag representative of the completion of an operating phase of the vehicle engine.

5. Method for checking the correct operation of a sensor for detecting a change of state of a driver door of a motor vehicle, **characterized in that** it comprises the steps of:
- generating a set of at least one flag the value of which reflects the appearance of an event for the vehicle;
- setting the value of a parameter representative of the pertinence of a parameter reflecting the inactivity of a sensor of the change of state of the vehicle door based on the value of one of the said flags; and
- checking the switching of the value of a flag reflecting the opening or closing of the door after setting of the value of the said parameter.

6. Method according to Claim 5, **characterized in that** the said flags comprise a flag for identifying the completion of a phase of operation of the engine, a flag for identifying the opening of the door, and a flag for identifying the closing of the door.

7. Method according to either of Claims 5 and 6, **characterized in that** the flags are generated based on signals originating from measurement sensors.

8. Method according to Claim 7, **characterized in that** the flags are set for a predetermined period of time.

9. Method according to one of Claims 5 to 8, **characterized in that** a counter is incremented on each setting of the value of the said parameter and a malfunction is detected by comparing the count value of the counter with a threshold value.

10. Method according to any one of Claims 5 to 9, **characterized in that** the parameter representative of the pertinence of the parameter reflecting the inactivity of the said sensor is set in a state of high pertinence after identification of the completion of an operating phase of the engine.

11. Method of braking a motor vehicle by means of an assisted parking brake operated by means of a sensor of the opening of a driver door, **characterized in that** the operation of the sensor is checked by means of a method according to any one of Claims 5 to 10.

## Patentansprüche

1. Vorrichtung zur Überprüfung des einwandfreien Betriebs eines Sensors zur Erfassung einer Zustandsänderung einer Fahrertür eines Kraftfahrzeugs, **dadurch gekennzeichnet, dass** sie Einrichtungen (2), um einen Satz von mindestens einem Flag zu erarbeiten, dessen Wert das Auftreten eines Ereignisses für das Fahrzeugs ausdrückt, Einrichtungen (3), um den Wert eines Parameters zu positionieren, der für die Relevanz eines Parameters repräsentativ ist, der die Inaktivität eines Zustandsänderungssensors der Fahrzeugtür ausgehend vom Wert eines der Flags ausdrückt, und Einrichtungen enthält, um das Umschalten des Werts eines Flags zu überprüfen, der das Öffnen oder Schließen der Tür nach der Positionierung des Werts des Parameters ausdrückt.

2. Vorrichtung nach Anspruch 1, **dadurch gekennzeichnet, dass** sie außerdem einen Zähler, der bei jeder Positionierung des Werts des Parameters inkrementiert werden kann, der für die Relevanz des Parameters repräsentativ ist, der die Inaktivität des Sensors ausdrückt, und Einrichtungen zur Erfassung einer Funktionsstörung durch Vergleich des Werts des Zählers mit einem Schwellwert enthält.

3. Vorrichtung nach Anspruch 2, **dadurch gekennzeichnet, dass** sie Einrichtungen enthält, um den Zähler bei jedem Umschalten des Werts des Flags zurückzusetzen, der das Öffnen oder Schließen der Tür ausdrückt.

4. Vorrichtung nach einem der Ansprüche 1 bis 3, **dadurch gekennzeichnet, dass** die Einrichtungen, um den Wert des Parameters zu positionieren, Einrichtungen aufweisen, um den Parameter ausgehend von dem Wert eines Flags zu erarbeiten, der für die Beendigung einer Betriebsphase des Motors des Fahrzeugs repräsentativ ist.

5. Verfahren zur Überprüfung des einwandfreien Betriebs eines Sensors zur Erfassung einer Zustandsänderung einer Fahrertür eines Kraftfahrzeugs, **dadurch gekennzeichnet, dass** es die folgenden Schritte aufweist:
- Erarbeiten eines Satzes von mindestens einem Flag, dessen Wert das Auftreten eines Ereignisses für das Fahrzeug ausdrückt;
- Positionieren des Werts eines Parameters, der für die Relevanz eines Parameters repräsentativ ist, der die Inaktivität eines Zustandsänderungssensors der Fahrzeugtür ausgehend vom Wert eines der Flags ausdrückt; und
- Überprüfung des Umschaltens des Werts eines Flags, der das Öffnen oder Schließen der Tür nach der Positionierung des Werts des Parameters ausdrückt.

6. Verfahren nach Anspruch 5, **dadurch gekennzeichnet, dass** die Flags ein Flag zur Identifikation der Beendigung einer Betriebsphase des Motors, ein Flag zur Identifikation des Öffnens der Tür und ein Flag zur Identifikation des Schließens der Tür enthalten.

7. Verfahren nach einem der Ansprüche 5 und 6, **dadurch gekennzeichnet, dass** die Flags ausgehend von Signalen erarbeitet werden, die von Messfühlern stammen.

8. Verfahren nach Anspruch 7, **dadurch gekennzeichnet, dass** die Flags während einer vorbestimmten Zeitdauer positioniert werden.

9. Verfahren nach einem der Ansprüche 5 bis 8, **dadurch gekennzeichnet, dass** ein Zähler bei jeder Positionierung des Werts des Parameters inkrementiert wird, und eine Fehlfunktion durch Vergleich des Zählwerts des Zählers mit einem Schwellwert erfasst wird.

10. Verfahren nach einem der Ansprüche 5 bis 9, **dadurch gekennzeichnet, dass** der für die Relevanz des Parameters, der die Inaktivität des Sensors ausdrückt, repräsentative Parameter nach der Identifikation der Beendigung einer Betriebsphase des Motors in einem Zustand hoher Relevanz positioniert wird.

11. Verfahren zum Bremsen eines Kraftfahrzeugs mittels einer automatischen Parkbremse, die mittels eines Öffnungssensors der Fahrertür gesteuert wird, **dadurch gekennzeichnet, dass** der Betrieb des Sensors mittels eines Verfahrens nach einem der Ansprüche 5 bis 10 überprüft wird.
